# EUROPEAN PATENT SPECIFICATION

(11) **EP 3 256 779 B1**
(45) Date of publication and mention of the grant of the patent: **08.05.2019**
(21) Application number: 15708249.6
(22) Date of filing: 13.02.2015
(51) Int. Cl.: F23B 50/02, F23B 60/00, F23G 7/10, F23B 20/00, F23L 15/02, F23B 50/12

(54) **PORTABLE HEAT AND ELECTRICITY GENERATING DEVICE**
TRAGBARE WÄRME- UND ELEKTRIZITÄTSERZEUGUNGSVORRICHTUNG
DISPOSITIF PORTABLE DE GÉNÉRATION DE CHALEUR ET D'ÉLECTRICITÉ

(43) Date of publication of application: 20.12.2017
(73) Proprietor: Finn-Savotta Oy, 43500 Karstula (FI)
(72) Inventor: VAHTERA, Tommi, FI-33820 Tampere (FI); YLIRISKU, Pasi, FI-04130 Sipoo (FI)
(74) Representative: Helke, Kimmo Kalervo
(86) International application number: PCT/FI2015/050091
(87) International publication number: WO 2016/128608

(56) References cited:
- WO-A1-2014/149368
- DE-A1-102006 017 133
- US-A1- 2009 020 109
- US-A1- 2013 112 187

## Description

### TECHNICAL FIELD

The invention concerns in general the technology of portable combustion devices for generating heat and electricity, such as combined stoves, in particular a device according to the preamble of claim 1. The invention concerns the way in which both heat and electricity is produced by burning solid material in a stove like device which can be operated as an independent unit in field conditions.

### BACKGROUND OF THE INVENTION

Today many military and outdoor devices, such as GPS-, communication, target illumination, night vision, etc. devices are battery operated. The availability of recharging batteries during a military operation or just during a recreational outdoor activity, has become more and more critical aspect of an operation. As soldiers carry more portable electronics, battery weight becomes an issue. According to the US Army Research Laboratory (ARL), on a 72-hour mission in Afghanistan, a US soldier will carry 70 batteries for such devices as night-vision optics, GPS, imaging systems, and communications gear. This adds 20 pounds to a combat load, one-fifth of total weight. The load can contribute to fatigue and affect movement during combat. On the cost side, an infantry battalion spends $150,000 per year on batteries, its second-largest expense after munitions.

In cold environment also heating of portable or movable accommondation such as a tent or like is of importance for soldiers, backpackers and hunters staying outdoors overnight. For this purpose there are lightweight but efficient portable stoves capable of warming up a tent. Normally these stoves use chopped firewood as fuel.

In a civil engineering a combined heat and power plant (CHP) is the "standard" configuration for producing heat and electric power for urban areas locating at cold areas. These multimegawatt or terawatt sized plants are technologically very remote from the present invention but still the principle is the same, to produce heat and electric power at the same time. However, this technology is totally different to the present invention intended to be used at temporary accommondations and being easily transported, even portably, to the place of the accommondation need to be changed.

From the state of the art it is known document EP 2629007 A2 which discloses a wood pellet using combustion apparatus. In the case where a commercial power source is employed, the motor fails to be driven when power supply stops from the electric company due to a power outage or the like, which disables the fuel conveyor system, making it impossible to supply the wood pellets as fuel to the combustion chamber. As a result, the pellet stove, which is spared the need for electricity as the heat source by using wood pellets as the heat source through the combustion of the wood pellets as fuel, still cannot be used during a power outage because of being incapable of supplying fuel. A combustion apparatus according to the EP 2629007A2 includes: a combustion chamber for combusting a fuel material; a thermoelectric power generation module for generating power based on a temperature difference caused by heating with a combustion temperature generated along with the combustion in the combustion chamber and by cooling with an external temperature outside the combustion chamber; and an electric drive means which operates using, as a drive force, thermoelectric power generated by the thermoelectric power generation module.

From the state of the art it is also know document WO2008/001276A2 which discloses a solid fuel stove comprising: a combustion chamber for containing combustion fuel, which chamber has a lower side portion for accommodating fuel and an upper side portion; a blower assembly configured to provide airflow entering the combustion chamber in operating condition; guiding means to direct the airflow into the combustion chamber; wherein the guiding means direct the airflow from the upper side portion to the lower side portion. According to an embodiment, the stove also comprises a rechargeable electrical power source for driving the blower assembly and a thermoelectric element are provided, and wherein the thermoelectric element is configured to provide power to the blower assembly and to the rechargeable power source. Another prior art is known from US2009/0020109 A1 which discloses the preamble of claim 1.

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

As both EP 2629007 A2 (later referred as D1) and WO2008/001276A2 (later referred as D2) are intended for fixed installation, the objective of the present invention is to provide a device capable of both to produce heat and electric power and still being portable when the device is not in use i.e. the fuel is not burning. One objective of the present invention is to provide a device without any moving or rotating parts. The state of art documents both D1 and D2 teach the use of blowers to enhance combustion air feeding to improve the combustion and thus to contribute to clean combustion.

One aspect of the present invention is to provide a decentralized charging system to charge batteries near the end user, even down to the single, pair or patrol level. Thus to provide an easy way to keep up the batteries charged during the time the user is resting or otherwise not moving. The conventional way has been to use aggregates and similar electricity generating devices in more centralized way, but the objective of the present invention is to reduce this need of centralized battery charging function. Preferably the fuel to be used in the present device is solid fuel such as wood pellet, wood chip, charcoal or like.

According to an aspect of the present invention it is provided a portable heat and electricity generating device according to claim 1.

Thus the device is constructed such that it is portable i.e. even a single person, such as a soldier, can carry it for heat and electricity generating purpose. Naturally the device can be up scaled so that more manpower is needed, but the lightest embodiments are easily carried.

The basic construction is an enclosure made of fire proof material like sheet metal and it comprises openings for fuel feed, combustion air intake, exhaust gas outlet and an electricity outlet. To the fuel feed opening a fuel container can be attached by means of bayonet, thread, friction or like so that the fuel can supplied to the correct place when in use. For combustion exhaust gas outlet a chimney or corresponding tubular element is to be attached to lead the exhaust gas out and also to provide part of the heat radiation to surrounding areas. Thus the heating function is carried out partly by the hot surfaces of the enclosure and partly by the chimney attached to the exhaust gas outlet of the enclosure. An electricity outlet is also provided so that the electricity can be taken out of the device. Most preferably it is a socket like outlet.

Within the enclosure there are provided an intake channel for combustion air to be led to a combustion chamber. An electricity generating element is provided to generate the electricity. A heat transfer element is extending to the combustion chamber to distribute the heat further from the combustion chamber, when in the device is in use. With the device there is a need to transfer the heat from the place where it is generated, i.e. from the combustion chamber. There is also provided a specific element on which the material is put for burning, it is a fire grate for fuel material to be located for combustion. The fuel feed opening is located above the combustion chamber so that the fuel feed is gravity based. It means that there are no need for arrangements like conveyors, manual feeding or like which transport the fuel from a storage place or container to the combustion chamber. Here it is designed so that the gravity does the work, the fuel drops and feeds based on gravity when there is room for fuel in the combustion chamber.

The intake channel is located parallel to the combustion chamber and the direction of the air flow in the intake channel is configured opposite to the direction of the combustion/exhaust gas flow. The purpose of this feature is to be able to provide a small sized unit where it is possible to obtain an effective heat transfer from the combustion chamber to the combustion air by preheating it in an efficient manner. The efficiency is obtained so that a heat sink is provided in the intake channel for pre-heating the intake air before combustion. But to obtain the efficiency in the electricity generating function, the electricity generating element is a thermoelectric element provided between the heat sink and the heat transfer element. Thus the majority of the heat designed to be transferred from the combustion to the combustion air pre-heating is conducted through the thermoelectric element. Thus a great temperature gradient at the thermoelectric element is the desired status when the device is in use. The pre-heated combustion air increases the burning rate and temperature at the combustion and that causes cleaner burning, less pollution and less non-burned volatiles in the exhaust gas. The higher the temperature in the combustion chamber, the bigger is the temperature difference over the thermoelectric element which contributes to production of electricity. Further, combustion air preheating, combustion, heat generation, electricity generation forms a self-balancing process wherein the preheating increases both burning temperature and the electricity production. Naturally the combustion and heat transfer reaches at some point a steady state where the temperature is no longer rising.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. In this description terms intake/combustion air (A) is used to describe the air to be participating in combustion. Those terms intake air and combustion air are also used here as synonyms. A term combustion/exhaust gas (E) is used to describe the gas which is burning at that moment/location or no longer burning.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 illustrates a side view of an embodiment of the device,
FIG. 2 illustrates a front view of the embodiment of FIG. 1,
FIG. 3 illustrates a front view of another embodiment of the device,
FIG. 4 illustrates a front view of still another embodiment of the device,
FIG. 5 illustrates a front view of still another embodiment of the device,
FIG. 6 illustrates a front view of still another embodiment of the device.

### DETAILED DESCRIPTION OF EMBODIMENTS OF THE INVENTION

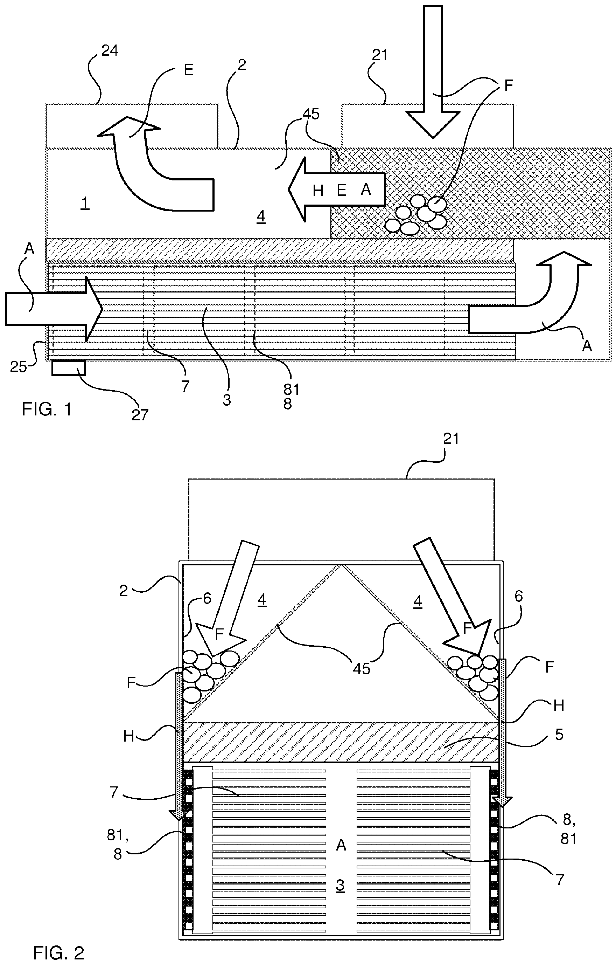

In FIG. 1 it is presented a portable heat and electricity generating device 1 comprising:
- an enclosure 2 comprising openings for fuel feed 21, combustion air intake 25, exhaust gas outlet 24 and an electricity outlet 27,
- within the enclosure 2 there are provided an intake channel 3 for combustion air A, a combustion chamber 4 and an electricity generating element 8,
- a heat transfer element 6 extending to the combustion chamber 4 to distribute the heat H further from the combustion chamber 4, when in the device is in use,
- a fire grate 45 for fuel F material to be located for combustion,
- the fuel feed opening 21 is located above the combustion chamber 4 so that the fuel F feed is gravity based,
- the intake channel 3 is located parallel to the combustion chamber 4 and the direction of the air A flow in the intake channel is configured opposite to the direction of the combustion/exhaust gas E flow,
- a heat sink 7 is provided in the intake channel 3 for pre-heating the intake/combustion air A before combustion,
- the electricity generating element 8 is a thermoelectric element 81 provided between the heat sink 7 and the heat transfer element 6.

Thus the process for producing heat and electricity in a portable device 1 in the FIG. 1 is the following: the method comprises steps of:
- providing solid fuel F to a combustion chamber 4,
- providing combustion air A to the combustion chamber 4,
- burning the mixture of fuel F and combustion air A,
- conducting the heat H caused by the combustion via a heat transfer element 6 to a high temperature side of a thermoelectric element 81,
- cooling a low temperature side of the thermoelectric element 81 with a heat sink 7 located in an intake channel 3,
- convection by the heat sink 7 pre-heats the combustion air A in the intake channel 3 before entering to the combustion chamber 4, the pre-heated combustion air A increases the burning temperature and thus causes increasing in the temperature gradient with the thermoelectric element 81.

Further in the FIG. 1 it is shown that the fire grate 45 is configured such that the fuel F is prevented from falling in to the air intake channel 3. It can be a mesh structure, the fire grate can be bent in a suitable way or inclined to a direction preventing the fuel to go wrong place. The solid fuel is provided in a fuel container (not shown) which is attachable to the fuel feed opening 21. According to an embodiment the fuel container is designed to contain an amount of fuel of a predetermined burning time. The fuel container can also be an open top funnel like container, where the user can increase fuel when needed. It is also preferable, that the container has at least some ventilation to pass some replacement air through the container to ensure the proper function of gravity based fuel feed.

In FIG. 2 it is presented a front view of the embodiment of FIG. 1. Thus within the enclosure 2 there are provided an intake channel 3 for combustion air A, a combustion chamber 4 and an electricity generating element 8, 81
- a heat transfer element 6 extending to the combustion chamber 4 to distribute the heat H further from the combustion chamber 4, when the device is in use. In the embodiment of FIG. 2 the heat transfer element is the wall of the enclosure 2. Thus the combustion heats the wall of the enclosure 2, which conducts the heat H downwards to electricity generating element 8 such as the thermoelectric element 81. In general, the heat transfer element 6 is configured to conduct heat H from combustion chamber 4 to the thermoelectric element 81. The heat transfer element 6 can have also various other forms as will be shown in other figures. There is also provided an insulation layer 5 between the combustion chamber 4 and the intake channel 3 to reduce the heat transfer via other routes than through the thermoelectric element 81. This has a positive effect on efficiency of the electricity production. The temperature difference is bigger between the intake channel 3 and the combustion chamber when heat transfer thorough other routes is prevented by an insulation layer 5. It also improves significantly the electricity production efficiency.

In FIG. 2 it is shown that there is provided a fire grate 45 for fuel F material to be located for combustion and that the fuel feed opening 21 is located above the combustion chamber 4 and the fire grate so that the fuel F feed is gravity based. For illustrative purposes there are only few fuel F pellets shown in figures. Preferably the fire grate 45 is inclined so that the fuel F flows to an accumulation area for effective combustion. As the combustion is effective when the distance between the burning fuel particles is small in relation to each other and the combustion air feed is effective, the inclined fire grate by nature collects all the fuel particles, such as wood pellet, wood chip, charcoal or like, together for effective combustion. According to tests the angle of inclination is preferably within a range of 15° to 60°, wherein 45° is especially suitable. The accumulation area here refers to an area where the potential energy of a fuel pellet 4 in the combustion chamber 4 is its local minimum. Also according to an aspect the fire grate 45 for fuel material to be located for burning is inclined so that the burning material flows toward the heat transfer element 6 for optimal combustion and heat transfer to the heat transfer element 6.

In FIG. 2 is illustrated a location for the thermoelectric element 81 which is configured to generate electricity from the temperature difference between the heat transfer element 6 and the heat sink 7 in the intake channel 3. The heat sink is preferably a construction comprising multiple parallel plates attached together via a base plate. It may be of steel, cast iron, extruded aluminium or like.

The thermoelectric element is a Seebeck element or similar where a thermal gradient formed between two dissimilar conductors produces a voltage. At the heart of the thermoelectric effect is the fact that a temperature gradient in a conducting material results in heat flow; this results in the diffusion of charge carriers. The flow of charge carriers between the hot and cold regions in turn creates a voltage difference. This topic is under intensive scientific studies, research and development so in near future it can be expected to have better materials and improvements in efficiency compared to present thermoelectric elements. Further the thermoelectric element is connectable to an electric unit comprising a transformer for converting the voltage of the thermoelectric element to a charge voltage, such as 5 or 14 Volts. As a user interface, the enclosure is provided with electricity outlet 27, such as a socket for connecting the electric unit to the device 1.

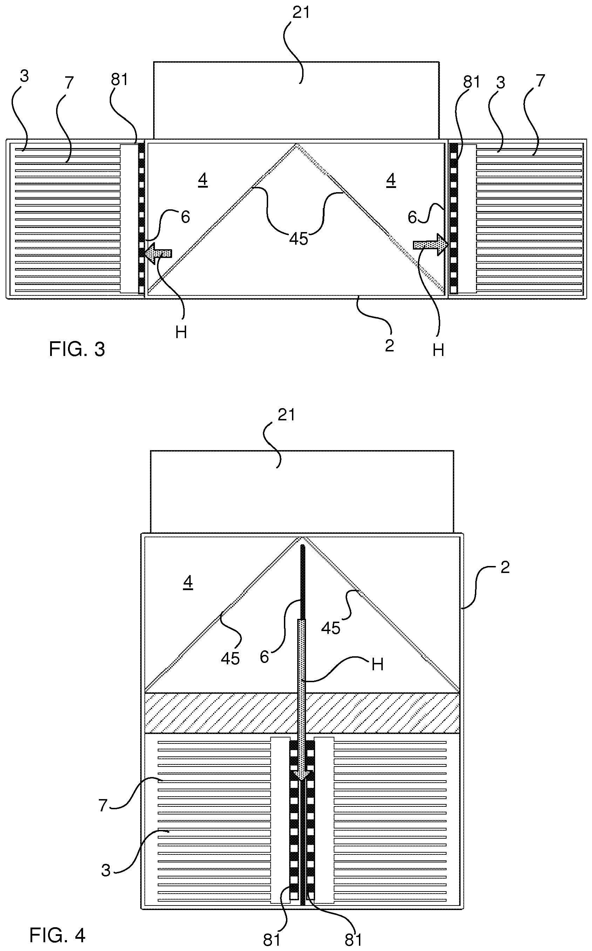

In FIGs 3, 4, 5 and 6 there are shown various configurations of the present device 1, shown all from the front view. It is shown that the intake channel 3 located parallel to the combustion chamber 4 is below, above or beside the combustion chamber 4. The heat transfer element 6 is configured to conduct heat H from combustion chamber 4 to the thermoelectric element 81 and there are many possibilities to arrange the same function but in a different configuration.

In FIG. 3 it is presented a front view of an embodiment of a flat layout. Within the enclosure 2 there are provided an intake channel 3 for combustion air A, a combustion chamber 4 and an electricity generating element 8, the thermoelectric element 81. The intake channels are provided on both sides of the combustion chamber 4. A heat transfer element 6 extending to the combustion chamber 4 to distribute the heat H further from the combustion chamber 4, when in the device is in use, is here the wall of the combustion chamber 4. Thus the combustion heats the wall of the combustion chamber, which conducts the heat H directly through to electricity generating element such as the thermoelectric element 81. In this embodiment there are not provided an insulation layer 5, however it could be for example on the bottom of the enclosure 2 to reduce the heat transfer downwards. This layout has a positive effect on efficiency of the electricity production since the heat transfer distance is the shortest possible. However it may restrict the selection of suitable thermoelectric elements since the temperature at that location is reasonable high.

In FIG. 4 it is presented a front view of an embodiment of a layout. Within the enclosure 2 there are provided an intake channel 3 for combustion air A, a combustion chamber 4 and an electricity generating element 8, the thermoelectric element 81. The intake channels are provided below the combustion chamber 4. A heat transfer element 6 is extending to the combustion chamber 4 to distribute the heat H further from the combustion chamber 4, when in the device is in use, is here a wall like element provided in the middle of the enclosure 2. Thus the combustion heats the wall like heat transfer element in or at the combustion chamber, which conducts the heat H to electricity generating element such as the thermoelectric element 81. In this embodiment there is provided an insulation layer 5. This layout may be modified also so that the inclined fire grate is inclined towards the heat transfer element.

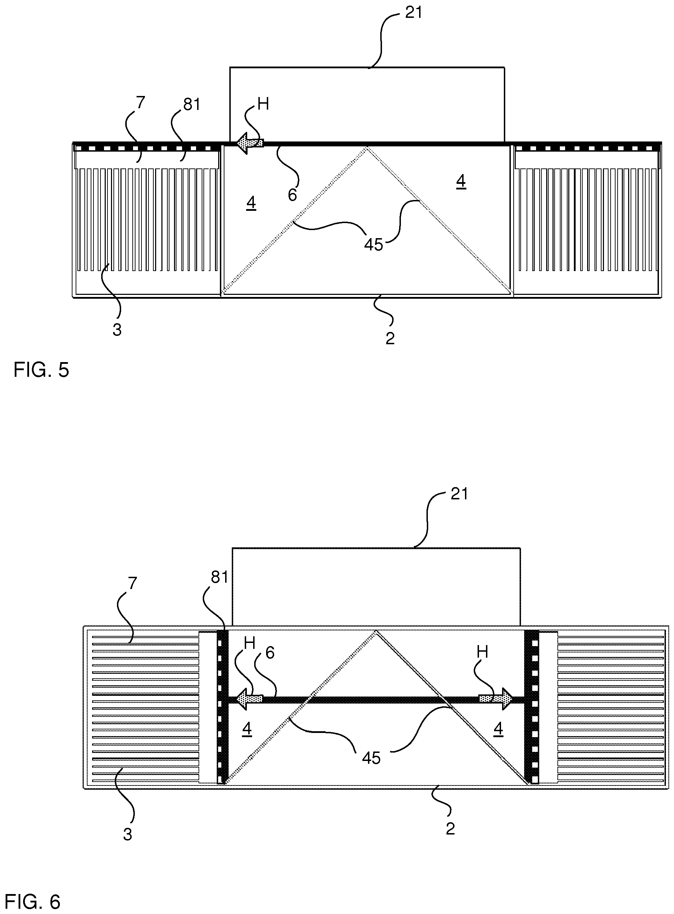

In FIG. 5 it is presented a front view of another embodiment of a flat layout. Within the enclosure 2 there are provided an intake channel 3 for combustion air A, a combustion chamber 4 and an electricity generating element 8, the thermoelectric element 81. The intake channels are provided on both sides of the combustion chamber 4. A heat transfer element 6 extending to the combustion chamber 4 to distribute the heat H further from the combustion chamber 4, when in the device is in use, is here the roof of the combustion chamber 4. Thus the combustion heats the roof of the combustion chamber, which conducts the heat H through to electricity generating element such as the thermoelectric element 81. In this embodiment there are not provided an insulation layer 5, however it could be for example on the bottom of the enclosure 2 to reduce the heat transfer downwards.

In FIG. 6 it is presented a front view of another embodiment of a flat layout. Within the enclosure 2 there are provided an intake channel 3 for combustion air A, a combustion chamber 4 and an electricity generating element 8, the thermoelectric element 81. The intake channels are provided on both sides of the combustion chamber 4. A heat transfer element 6 extending to the combustion chamber 4 to distribute the heat H further from the combustion chamber 4, when in the device is in use, is here a separate element within of the combustion chamber 4. Thus the combustion heats the heat transfer element in the combustion chamber, which conducts the heat H through to electricity generating element such as the thermoelectric element 81. In this embodiment there are not shown an insulation layer 5, however it could be for example on the bottom of the enclosure 2 to reduce the heat transfer downwards.

Variations and modifications to the embodiments described above are possible without departing from the scope of the amended claims. For example, instead of heat sink, the heat can be transferred to the intake channel by means of other conductive or convective device.

### REFERENCE SIGNS USED IN FIGURES

- 1: device
- 2: enclosure
- 21: fuel feed opening
- 24: exhaust gas outlet
- 25: combustion air intake
- 27: electricity outlet
- 3: intake channel for combustion air
- 4: combustion chamber
- 45: fire grate
- 5: insulation layer
- 6: heat transfer element
- 7: heat sink
- 8: electricity generating element
- 81: thermoelectric element
- A: intake/combustion air
- E: combustion/exhaust gas
- F: fuel
- H: heat

## Claims

1. A portable heat and electricity generating device (1) comprising:
- an enclosure (2) comprising openings for fuel feed (21), combustion air intake (25), exhaust gas outlet (24) and an electricity outlet (27),
- within the enclosure (2) there are provided an intake channel (3) for combustion air (A), a combustion chamber (4) and an electricity generating element (8),
- a heat transfer element (6) extending to the combustion chamber (4) to distribute the heat (H) further from the combustion chamber (4), when the device is in use,
- a fire grate (45) in the combustion chamber (4) for fuel (F) material to be located for combustion,
wherein the device (1) further comprises:
- the fuel feed opening (21) is located above the combustion chamber (4) so that the fuel (F) feed is gravity based,
- a heat sink (7) is provided in the intake channel (3) for pre-heating the combustion air (A) before combustion,
- the electricity generating element (8) is a thermoelectric element (81) provided between the heat sink (7) and the heat transfer element (6),
• wherein the intake channel (3) is located parallel to the combustion chamber (4) and the direction of the air (A) flow in the intake channel (3) is configured opposite to the direction of the combustion/exhaust gas (E),
• **characterized in that**,
• the grate (45) is provided with two inclined mesh structures located in the opposite part of the enclosure (2) and forming a ridge, wherein the angle of inclination is within a range of 15° to 60° and said grate is below the fuel feed (F), and configured to prevent fuel F from falling to the air intake channel (3).

2. A device (1) according to claim 1, **characterized in that** the intake channel (3) located parallel to the combustion chamber (4) is below, above or beside the combustion chamber (4).

3. A device (1) according to claim 1, **characterized in that** the heat transfer element (6) is configured to conduct heat (H) from combustion chamber (4) to the thermoelectric element (81).

4. A device (1) according to claim 1 or 2, **characterized in that** the thermoelectric element (81) is configured to generate electricity from the temperature difference between the heat transfer element (6) and the heat sink (7) in the intake channel (3).

5. A device (1) according to claim 1, **characterized in that** the fuel (F) is solid fuel such as wood pellet, wood chip, charcoal or like.

6. A device (1) according to claim 1 and 5, **characterized in that** the solid fuel (F) is provided in a fuel container which is attachable to the fuel feed opening (21).

7. A device (1) according to claim 1, **characterized in that** the thermoelectric element (81) is a Seebeck element where a thermal gradient formed between two dissimilar conductors produces a voltage.

8. A device (1) according to claim 1, **characterized in that** there is provided an insulation layer (5) between the combustion chamber (4) and the intake channel (3) to reduce the heat transfer via other routes than through the thermoelectric element (81).

9. A device (1) according to claim 1, **characterized in that** the thermoelectric element (81) is connectable to a transformer for converting the voltage of thermoelectric element (81) to a charge voltage, such as 5 or 14 Volts.

10. A device (1) according to claim 6, **characterized in that** the fuel container is designed to contain an amount of fuel of a predetermined burning time.

## Patentansprüche

1. Tragbare Wärme- und Elektrizitätserzeugungsvorrichtung (1) umfassend:
- ein Gehäuse (2) mit Öffnungen für die Kraftstoffzufuhr (21), einen Verbrennungslufteinlass (25), einen Abgasauslass (24) und einen Stromauslass (27),
- innerhalb des Gehäuses (2) sind vorgesehen: ein Ansaugkanal (3) für Verbrennungsluft (A), eine Brennkammer (4) und ein stromerzeugendes Element (8),
- ein Wärmeübertragungselement (6), das sich zu der Brennkammer (4) erstreckt, um die Wärme (H) weiter von der Brennkammer (4) zu verteilen, wenn die Vorrichtung in Gebrauch ist,
- ein Feuergitter (45) in der Brennkammer (4) für die Anordnung des zur Verbrennung vorgesehenen Brennstoffs (F),
wobei die Vorrichtung (1) weiterhin umfasst:
- die Kraftstoffzufuhröffnung (21) ist oberhalb der Brennkammer (4) angeordnet, so dass die Kraftstoffzufuhr (F) schwerkraftbasiert ist,
- eine Wärmesenke (7) ist im Ansaugkanal (3) zum Vorwärmen der Verbrennungsluft (A) vor der Verbrennung vorgesehen,
- das stromerzeugende Element (8) ist ein thermoelektrisches Element (81), das zwischen der Wärmesenke (7) und dem Wärmeübertragungselement (6) vorgesehen ist,
wobei
- der Ansaugkanal (3) parallel zur Brennkammer (4) angeordnet ist und die Richtung der Luftströmung (A) im Ansaugkanal (3) entgegen der Richtung des Verbrennungs-/Abgases (E) konfiguriert ist,
**dadurch gekennzeichnet, dass**
- das Gitter (45) mit zwei geneigten Gitterstrukturen versehen ist, die sich im gegenüberliegenden Teil des Gehäuses (2) befinden und einen Grat bilden, wobei der Neigungswinkel in einem Bereich von 15° bis 60° liegt und das Gitter unterhalb der Kraftstoffzufuhr (F) liegt, und dazu konfiguriert ist, zu verhindern, dass Kraftstoff F in den Lufteinlasskanal (3) fällt.

2. Vorrichtung (1) nach Anspruch 1, **dadurch gekennzeichnet, dass** sich der parallel zur Brennkammer (4) angeordnete Ansaugkanal (3) unterhalb, oberhalb oder neben der Brennkammer (4) befindet.

3. Vorrichtung (1) nach Anspruch 1, **dadurch gekennzeichnet, dass** das Wärmeübertragungselement (6) konfiguriert ist, um Wärme (H) von der Brennkammer (4) zum thermoelektrischen Element (81) zu leiten.

4. Vorrichtung (1) nach Anspruch 1 oder 2, **dadurch gekennzeichnet, dass** das thermoelektrische Element (81) konfiguriert ist, um aus der Temperaturdifferenz zwischen dem Wärmeübertragungselement (6) und der Wärmesenke (7) im Ansaugkanal (3) Strom zu erzeugen.

5. Vorrichtung (1) nach Anspruch 1, **dadurch gekennzeichnet, dass** der Brennstoff (F) fester Brennstoff wie Holzpellet, Hackschnitzel, Holzkohle oder dergleichen ist.

6. Vorrichtung (1) nach Anspruch 1 und 5, **dadurch gekennzeichnet, dass** der feste Brennstoff (F) in einem Brennstoffbehälter vorgesehen ist, der an der Brennstoffzufuhröffnung (21) befestigbar ist.

7. Vorrichtung (1) nach Anspruch 1, **dadurch gekennzeichnet, dass** das thermoelektrische Element (81) ein Seebeck-Element ist, bei dem ein zwischen zwei ungleichen Leitern gebildeter Wärmegradient eine Spannung erzeugt.

8. Vorrichtung (1) nach Anspruch 1, **dadurch gekennzeichnet, dass** zwischen der Brennkammer (4) und dem Ansaugkanal (3) eine Isolierschicht (5) vorgesehen ist, um den Wärmeübergang auf anderen Wegen als durch das thermoelektrische Element (81) zu reduzieren.

9. Vorrichtung (1) nach Anspruch 1, **dadurch gekennzeichnet, dass** das thermoelektrische Element (81) mit einem Transformator zum Umwandeln der Spannung des thermoelektrischen Elements (81) in eine Ladespannung, wie beispielsweise 5 oder 14 Volt, verbindbar ist.

10. Vorrichtung (1) nach Anspruch 6, **dadurch gekennzeichnet, dass** der Kraftstoffbehälter so ausgelegt ist, dass er eine Kraftstoffmenge mit einer vorbestimmten Brennzeit enthält.

## Revendications

1. Dispositif portable de génération de chaleur et d'électricité (1) comprenant :
- un boîtier (2) présentant des ouvertures pour l'alimentation en combustible (21), une entrée pour l'air de combustion (25), une sortie de gaz d'échappement (24) et une sortie d'électricité (27),
- dans le boîtier (2), un canal d'entrée (3) pour l'air de combustion (A), une chambre de combustion (4) et un élément pour la génération d'électricité (8),
- un élément de transfert de chaleur (6) se prolongeant jusqu'à la chambre de combustion (4) pour distribuer la chaleur (H) au-delà de la chambre de combustion (4), lorsque le dispositif est en cours d'utilisation,
- une grille (45) dans la chambre de combustion (4) où le combustible (F) doit être placé pour la combustion,
le dispositif (1) comprenant également :
- l'ouverture pour l'alimentation en combustible (21), située au-dessus de la chambre de combustion (4) pour que l'alimentation en combustible (F) soit guidée par la gravité,
- un puits de chaleur (7) placé dans le canal d'entrée (3) pour préchauffer l'air de combustion (A) avant la combustion,
- l'élément générant de l'électricité (8), qui est un élément thermoélectrique (81), placé entre le puits de chaleur (7) et l'élément de transfert de chaleur (6),
où
- le canal d'entrée (3) est situé en parallèle de la chambre de combustion (4) et la direction du flux d'air (A) dans le canal d'entrée (3) se fait à l'inverse de celle du gaz de combustion/d'échappement (E),
**caractérisé en ce que**,
- la grille (45) présente deux structures en maillage inclinées situées dans la partie opposée du boîtier (2) et formant une crête, l'angle d'inclinaison de laquelle étant compris entre 15° et 60°, et ladite grille se trouvant en dessous de l'alimentation en combustible (F) et étant conçue pour empêcher le combustible (F) de tomber dans le canal d'entrée d'air (3).

2. Dispositif (1) conformément à la revendication 1, **caractérisé en ce que** le canal d'entrée (3) situé en parallèle de la chambre de combustion (4) se trouve en dessous, au-dessus ou à côté de la chambre de combustion (4).

3. Dispositif (1) conformément à la revendication 1, **caractérisé en ce que** l'élément de transfert de chaleur (6) est conçu pour conduire la chaleur (H) de la chambre de combustion (4) jusqu'à l'élément thermoélectrique (81).

4. Dispositif (1) conformément à la revendication 1 ou 2, **caractérisé en ce que** l'élément thermoélectrique (81) est conçu pour générer de l'électricité grâce à la différence de température entre l'élément de transfert de chaleur (6) et le puits de chaleur (7) dans le canal d'entrée (3).

5. Dispositif (1) conformément à la revendication 1, **caractérisé en ce que** le combustible (F) est un combustible solide comme des granulés de bois, des copeaux de bois, du charbon ou des produits similaires.

6. Dispositif (1) conformément aux revendications 1 et 5, **caractérisé en ce que** le combustible solide (F) se trouve dans un contenant à combustible pouvant être attaché à l'ouverture d'alimentation en combustible (21).

7. Dispositif (1) conformément à la revendication 1, **caractérisé en ce que** l'élément thermoélectrique (81) est un élément à effet Seebeck où un gradient thermique formé entre deux conducteurs dissemblables produit une tension.

8. Dispositif (1) conformément à la revendication 1, **caractérisé en ce qu'**une couche d'isolation (5) est présente entre la chambre de combustion (4) et le canal d'entrée (3) pour réduire tout transfert de chaleur pouvant avoir lieu autrement que via l'élément thermoélectrique (81).

9. Dispositif (1) conformément à la revendication 1, **caractérisé en ce que** l'élément thermoélectrique (81) peut être connecté à un transformateur pour convertir la tension de l'élément thermoélectrique (81) en tension de charge, par exemple de 5 ou 14 volts.

10. Dispositif (1) conformément à la revendication 6, **caractérisé en ce que** le contenant à combustible est conçu pour contenir une quantité de combustible correspondant à un temps de combustion prédéterminé.
